# EUROPÄISCHE PATENTSCHRIFT

(11) **EP 3 196 078 B1**
(45) Veröffentlichungstag und Bekanntmachung des Hinweises auf die Patenterteilung: **29.05.2019**
(21) Anmeldenummer: 17151603.2
(22) Anmeldetag: 16.01.2017
(51) Int. Cl.: B60R 7/06

(54) **VORRICHTUNG ZUM VERSCHLIESSEN EINER ZUGANGSÖFFNUNG ZU EINEM AUFBEWAHRUNGSFACH UND AUFBEWAHRUNGSFACH**
DEVICE FOR CLOSING AN ACCESS OPENING TO A STORAGE COMPARTMENT AND STORAGE COMPARTMENT
DISPOSITIF DE FERMETURE D'UNE OUVERTURE D'ACCÈS D'UN COMPARTIMENT DE RANGEMENT ET COMPARTIMENT DE RANGEMENT

(30) Priorität: 22.01.2016 DE 202016100304 U
(43) Veröffentlichungstag der Anmeldung: 26.07.2017
(73) Patentinhaber: Minda KTSN Plastic Solution GmbH & Co. KG, 01796 Pirna (DE)
(72) Erfinder: Stiewe, Peter, 01129 Dresden (DE)
(74) Vertreter: Lins, Martina

(56) Entgegenhaltungen:
- US-A- 2 789 861
- US-A- 4 733 900

## Beschreibung

Die Erfindung betrifft eine Vorrichtung, insbesondere eine Verschlussklappe oder eine Schublade, zum Verschließen einer Zugangsöffnung zu einem Aufbewahrungsfach in einem Fahrzeug, die beweglich an dem Aufbewahrungsfach gelagert ist und eine in einem geschlossenen Zustand von einem Nutzer weg weisende Rückseite und eine zu dem Nutzer hin weisende Vorderseite aufweist. Die Erfindung betrifft ferner ein Aufbewahrungsfach für Fahrzeuge mit einer solchen Vorrichtung.

Moderne Fortbewegungsmittel, wie beispielsweise PKW, Schiffe oder Flugzeuge, müssen neben dem eigentlichen Fortbewegungszweck auch zunehmend steigende Komfortansprüche der Insassen oder Passagiere erfüllen. Ein Komfortaspekt liegt darin, dem Insassen oder Passagier die Möglichkeit zu bieten, seine mit sich mitgeführten Gegenstände vor oder während der Fortbewegung im Fortbewegungsmittel ablegen oder verstauen zu können, um auf diese bei Bedarf schnell wieder zugreifen zu können. Bei PKW waren derartige Aufbewahrungsfächer anfänglich als einfache, offene Ausnehmungen in der Instrumententafel oberhalb des Fußraumes auf der Beifahrerseite und später zwischen dem Fahrer- und Beifahrersitz angeordnet. Neben Verschlussklappen und Schiebeelementen zum Verschließen der Ablagefächer wurden zunehmend auch Aufnahmen für Gegenstände in die Ablagefächer und die Verschlussklappe integriert. Auf diese Weise konnten neben Getränkebehältnissen wie Dosen, Becher und Flaschen auch Sonnenbrillen, Stifte, Hefte, Audiokassetten und CDs etc. aufbewahrt werden.

Mit der schnellen Entwicklung auf dem Gebiet der Mobilfunkgeräte, die in jüngerer Zeit auch die Funktion eines Computers und Multimedia-Abspielgerätes übernommen haben, wie beispielsweise bei Smartphones oder Tablets, sind diese als stets mit sich geführte Alltagsgegenstände nicht mehr wegzudenken. Wenn ein Beifahrer in einem PKW das Smartphone oder Tablet beispielsweise als Navigationsgerät oder zum Abruf von Informationen über ein Reiseziel oder zum Anschauen eines Filmes nutzen möchte, muss er das Smartphone oder Tablet in der Hand halten oder auf seinem Schoss ablegen. Dies ist ergonomisch ungünstig und auf Dauer anstrengend sowie lästig. Eine Abhilfe für den Nutzer zu schaffen ist damit wünschenswert.

Die US 4733900 A betrifft eine Konsole zum Aufsetzen auf eine Motorverkleidung in einem Fahrzeuginnenraum, mit einem horizontal orientierten Abschnitt, in dem Ausnehmungen zur Aufnahme von Gegenständen oder Aschenbechern angeordnet sind. An einer sich vertikal erstreckenden Wand ist eine Tischanordnung mit schwenkbar gelagerten Paneelen angeordnet, die in verschiedenen Positionen fixiert werden können. In einer angehobenen Stellung befindet sich ein inneres Paneel in einer horizontalen Position und wird über ein vorderes Paneel abgestützt, in einer abgesenkten Position sind die beiden Paneele flach aufeinander gelegt.

Die US 2789861 A betrifft eine Handschuhfachtür mit einer auf der Rückseite angeordneten Klappe, über die Ausnehmungen in der Handschuhfachklappe abgedeckt sind. Dadurch ist es möglich, bei einer offenen Handschuhfachtür eine glatte Oberfläche oder eine mit Vertiefungen versehene Oberfläche bereitzustellen, um zu verhindern, dass darauf abgestellte Gegenstände, beispielsweise Becher, Flaschen, Brillen oder dergleichen verrutschen.

Halterungen für Smartphones oder Tablets sind als separate Zukaufartikel aus dem Stand der Technik bekannt. Nachteilig daran ist, dass die Halterungen beispielsweise auf der Instrumententafel aufgeklebt oder daran angeschraubt werden und somit auch bei Nichtverwendung stets als Zusatzteil sichtbar bleiben. Ein weiterer Nachteil an derartigen Halterungen kann die Einschränkung der Bedienfreiheit des Nutzers, beispielsweise beim Betätigen des Radios oder der Klimaanlage, sein.

Zur Lösung dieses Problems wird eine Vorrichtung zum Verschließen einer Zugangsöffnung zu einem Aufbewahrungsfach in einem Fahrzeug mit den Merkmalen des Hauptanspruchs sowie ein Aufbewahrungsfach mit den Merkmalen des nebengeordneten Anspruchs vorgeschlagen. Vorteilhafte Ausgestaltungen der Erfindung sind in den Unteransprüchen, der Beschreibung und den Zeichnungen offenbart.

Die Vorrichtung zum Verschließen einer Zugangsöffnung zu einem Aufbewahrungsfach in einem Fahrzeug, die beweglich am Aufbewahrungsfach gelagert ist und einen in einem geschlossenen Zustand von einem Nutzer weg weisende Rückseite und eine zu dem Nutzer hin weisende Vorderseite aufweist, sieht eine Aufnahmeeinrichtung für Gegenstände vor, die an der Vorrichtung angeordnet ist und die in einem geöffneten Zustand der Vorrichtung in eine zu dem Nutzer hin weisende Position bringbar ist. Die Aufnahmeeinrichtung kann auf diese Weise bei Bedarf in eine zu dem Nutzer hin weisende Position und bei Nichtverwendung wieder zusammen mit der Vorrichtung in den geschlossenen Zustand gebracht werden. Die Aufnahmeeinrichtung ist folglich nur bei Bedarf als solche erkennbar und bei Nichtgebrauch kompakt an oder in der Vorrichtung angeordnet. Dadurch, dass die Aufnahmeeinrichtung in dem geöffneten Zustand der Vorrichtung in eine zu dem Nutzer hin weisende Position bringbar ist, wird dem Nutzer ermöglicht, den darauf abgelegten und/oder darin aufgenommenen Gegenstand, wie beispielsweise ein Tablet, zu betrachten und zu bedienen. Dies hat für den Nutzer den Vorteil, dass er den Gegenstand nicht mit einer Hand in der zu dem Nutzer hin weisenden Position oder auf seinem Schoss halten muss. Vielmehr wird der Gegenstand in einer ergonomisch günstigen Position, ohne Anstrengung durch den Nutzer, gehalten und kann somit auch bequem bedient werden.

Eine erfindungsgemäß ausgestaltete Vorrichtung weist zumindest eine Führungsvorrichtung zum Führen der Aufnahmeeinrichtung aus einer Verstauposition in die zum Nutzer hin weisende Position auf. Die Führungsvorrichtung ermöglicht ein sicher geführtes Verstellen der Aufnahmeeinrichtung von der Verstauposition in die zum Nutzer hin weisende Position, ohne dass die Aufnahmeeinrichtung im Falle eines durch den Nutzer zu einer Drehachse unvorteilhaft schrägen Verstellens verkantet oder beschädigt wird.

Bei einer vorteilhaften Ausgestaltung ist die Vorrichtung gelenkig oder verschieblich an dem Aufbewahrungsfach gelagert. Dies ermöglicht eine flexible Ausrichtung der Vorrichtung und auch der daran angeordneten Aufnahmeeinrichtung zu dem Nutzer.

Vorzugsweise ist die Aufnahmeeinrichtung an der Rückseite angeordnet. Dadurch wird erreicht, dass die Aufnahmeeinrichtung bei Nichtgebrauch für den Nutzer unsichtbar verstaut ist. Der Nutzer kann den Fahrzeuginnenraum ohne räumliche Einschränkung nutzen und bei Bedarf wieder bequem auf die Aufnahmeeinrichtung zugreifen.

In einer Ausführungsform der Erfindung ist die Aufnahmeeinrichtung plattenförmig ausgebildet. Durch die im Verhältnis zur Höhe und Breite sehr geringe Dicke einer Platte, kann diese platzsparend an der Vorrichtung angeordnet werden, ohne den im Aufbewahrungsfach verfügbaren Stauraum nennenswert zu verringern und das Gesamtgewicht der Vorrichtung wesentlich zu erhöhen. Die Platte kann mit Mitteln zum Halten von Getränkebehältnissen, Mobilfunkgeräten und/oder Tablets ausgestaltet sein, wodurch ein gleichzeitiges Halten von Getränkebehältnissen, Mobilfunkgeräten und/oder Tablets ermöglicht wird.

Weiterhin kann die Aufnahmeeinrichtung als separates Bauteil ausgebildet sein, das im nicht verwendeten Zustand beispielsweise über eine Halterung an der Vorrichtung gehalten wird. Für die Verwendung kann die Aufnahmeeinrichtung aus der Halterung herausnehmbar und in dafür vorgesehene Ausnehmungen an der Vorrichtung einsteckbar ausgebildet sein. Es können auch Ausnehmungen an verschiedenen Stellen an der Vorrichtung vorgesehen sein, um die Aufnahmeeinrichtung in der vom Nutzer gewünschten, zu ihm hin weisenden Position in zumindest eine Ausnehmung einstecken zu können. Die Ausgestaltung mit einem separaten Bauteil ist konstruktiv sehr einfach und kostengünstig umzusetzen. Darüber hinaus können dem Nutzer mehrere Aufnahmeeinrichtungen mit jeweils verschiedenen Ausgestaltungen bereitgestellt werden, was dem Nutzer vielfältige und auf seine Bedürfnisse abgestimmte Anwendungsmöglichkeiten liefert.

Vorzugsweise ist die Aufnahmeeinrichtung gelenkig an der Vorrichtung gelagert. Dabei kann die Lagerung für die Aufnahmeeinrichtung derart ausgestaltet sein, dass die Aufnahmeeinrichtung in der Neigung stufenlos verstellbar und in der gewünschten Position arretierbar ist. Dies hat für den Nutzer den Vorteil, dass die Aufnahmeeinrichtung in Abhängigkeit von der Größe des Nutzers entsprechend ausgerichtet werden kann. Die gelenkig an der Vorrichtung gelagerte Aufnahmeeinrichtung kann darüber hinaus einfach und schnell in die zum Nutzer hin weisende Position gebracht werden. Auch ein Verschwenken und Ausrichten der Aufnahmeeinrichtung zu einem Fahrzeugführer, um diesem beispielsweise eine Streckenführung zu zeigen oder auch die Bedienung von beispielsweise einem Tablet zu ermöglichen, wird dadurch vorteilhafterweise erreicht. Dies ermöglicht eine besonders flexible Einstellung einer optimalen Bedien- und Betrachtposition.

Bei einer vorteilhaften Ausgestaltung der Erfindung weist die Vorrichtung ein Energiespeicherelement zum Vorspannen der Aufnahmeeinrichtung auf, so dass die Aufnahmeeinrichtung bei einem Entspannen des Energiespeicherelements automatisch in die zum Nutzer hin weisende Position bringbar ist. Das Energiespeicherelement wird durch den Nutzer beim Bewegen der Aufnahmeeinrichtung von einer zu dem Nutzer hin weisenden Position in eine Verstauposition vorgespannt. Das Entspannen kann unmittelbar mit dem Öffnen der Vorrichtung erfolgen oder aber über eine vom Nutzer zu betätigende, separate Betätigungsvorrichtung. Der Nutzer kann dadurch entscheiden, wann er die Aufnahmeeinrichtung nutzen möchte. Die zum Verfahren der Aufnahmeeinrichtung notwendige Energie kann dabei beispielsweise durch eine Gasdruckfeder oder eine Drehfeder mit einem Dämpfungselement bereitgestellt werden. Darüber hinaus wird durch das Energiespeicherelement ein geräuscharmes Verfahren der Aufnahmeeinrichtung in die zum Nutzer hin weisende Position und in die Verstauposition ermöglicht.

In einer Ausführungsform der Erfindung weist die Aufnahmeeinrichtung zumindest eine Aussparung zum Halten von Behältnissen auf. Vorteilhafterweise ist an einer Rückseite der Aufnahmeeinrichtung und/oder an der Rückseite der Vorrichtung ein Gegenhalter oder Sperrelement angeordnet, welches der Aussparung zugeordnet ist und ein Durchrutschen des in der Aussparung befindlichen Behältnisses verhindert. Dadurch, dass die Aufnahmeeinrichtung in eine zu dem Nutzer hin weisende Position bringbar ist, können die Behältnisse in einem ergonomisch vorteilhaften Winkel herausgenommen und wieder zurückgestellt werden. Weiterhin vorteilhaft an dieser Ausführungsform ist, dass der ausgebildete Halter durch ein Bewegen der Aufnahmeeinrichtung in die Verstauposition platzsparend verstaut werden kann.

Vorzugsweise weist die Aufnahmeeinrichtung zumindest eine Ausnehmung und/oder zumindest eine Halterung mit einem Klemmelement zum Festlegen von Tablets oder Mobiltelefonen auf. Vorteilhafterweise ist das Klemmelement und/oder die Halterung an der Aufnahmeeinrichtung verschiebbar angeordnet. Dadurch wird erreicht, dass ein Tablet oder Mobiltelefon unabhängig von dem Hersteller und seinen Abmessungen während einer Fahrt sicher in der Aufnahmeeinrichtung gehalten werden kann, ohne zu verrutschen oder herunterzufallen. Darüber hinaus können auch mehrere Geräte, beispielsweise ein Tablet und ein Mobiltelefon, in der zum Nutzer hin weisenden Position an der Aufnahmeeinrichtung festgelegt werden. Der festgelegte Gegenstand kann auch an der Aufnahmeeinrichtung verbleiben, wenn die Vorrichtung wieder in den geschlossenen Zustand gebracht wird.

Vorzugsweise weist die Aufnahmeeinrichtung eine erste Seite und eine der ersten Seite abgewandte, zu der ersten Seite unterschiedlich ausgebildete zweite Seite auf, wobei beide Seiten in die zum Nutzer hin weisende Position bringbar sind. Dies ermöglicht dem Nutzer vielfältige Nutzungsmöglichkeiten der Aufnahmeeinrichtung für unterschiedliche Gegenstände. Hierfür ist die Aufnahmeeinrichtung vorteilhafterweise herausnehmbar oder gelenkig an der Vorrichtung gelagert, um ein Umdrehen der Aufnahmeeinrichtung zu ermöglichen und die zur ersten Seite unterschiedlich ausgebildete zweite Seite dann als erste Seite nutzen zu können.

Vorzugsweise weist die Aufnahmeeinrichtung eine Haltevorrichtung auf, mittels der die Aufnahmeeinrichtung in der zum Nutzer hin weisenden Position an dem Aufbewahrungsfach oder an einem Strukturbauteil des Fahrzeuges oder einer das Aufbewahrungsfach umgebenden oder aufnehmenden Einrichtung, beispielsweise die Instrumententafel oder ein Sitz, festlegbar ist. Die Haltevorrichtung kann beispielsweise als Formschlusselement, Magnet oder als Klettverschluss ausgebildet sein. Hierzu können am Aufbewahrungsfach oder an anderen Fahrzeugteilen mehrere, in verschiedenen Positionen befindliche und zur Haltevorrichtung korrespondierende Vorrichtungen angeordnet sein, um die Aufnahmeeinrichtung dem Wunsch des Nutzers entsprechend positionieren zu können.

Vorzugsweise weist die Vorrichtung zumindest eine Rastung auf, in die die Führungsvorrichtung zum Halten der Aufnahmeeinrichtung in der zum Nutzer hin weisenden Position einrastbar ist. Durch die zumindest eine Rastung wird eine besonders einfache und günstige sowie stabile Konstruktion ermöglicht. Durch das Vorsehen von mehreren Rastungen kann die Aufnahmeeinrichtung entsprechend der vom Nutzer gewünschten Position positioniert und verrastet werden. Eine individuelle Einstellmöglichkeit ist somit auch mit dieser konstruktiv besonders einfachen Lösung möglich.

In einer Ausführungsform der Erfindung ist die Aufnahmeeinrichtung ausschließlich über die Führungsvorrichtung mit der Rückseite verbunden. Durch diese konstruktive Integration werden einerseits weniger Bauteile benötigt. Andererseits werden zahlreiche weitere Möglichkeiten eröffnet, die Kinematik der Aufnahmeeinrichtung zum Verfahren in die zum Nutzer hin weisende Position auszugestalten. Die Führungsvorrichtung kann beispielsweise als Rahmen ausgestaltet sein, der an der Rückseite der Vorrichtung verschwenkbar und/oder verschiebbar angeordnet ist. Die Aufnahmeeinrichtung kann dabei um eine Achse verdrehbar im Rahmen gelagert oder beispielsweise über ein Kugelgelenk an dem Rahmen angeordnet sein. Die Führungsvorrichtung kann auch als teleskopartig ausziehbarer Arm ausgestaltet sein, der mit einem Ende an der Rückseite der Vorrichtung festgelegt und mit dem anderen Ende mit der Aufnahmeeinrichtung, beispielsweise über ein Kugelgelenk, verbunden ist. Durch ein Kugelgelenk wird eine besonders vielseitige Ausrichtung durch und zu dem Nutzer ermöglicht, wobei das Kugelgelenk platzsparend in die Konstruktion integriert werden kann.

Die Erfindung sieht ferner ein Aufbewahrungsfach für Fahrzeuge vor, welches mit einer oben beschriebenen Vorrichtung oder mit einer vorteilhaften Weiterbildung davon ausgestattet ist.

Im nachfolgenden Abschnitt werden Ausführungsbeispiele der Erfindung anhand von Zeichnungen näher erläutert. Es zeigen:
- Figur 1: - eine perspektivische Ansicht einer Vorrichtung mit Aufnahmeeinrichtung in einem geschlossenen Zustand
- Figur 2: - eine perspektivische Ansicht einer Vorrichtung mit Aufnahmeeinrichtung in einer zum Nutzer hin weisenden Position
- Figur 3: - eine perspektivische Frontalansicht der Vorrichtung mit Aufnahmeeinrichtung in der zum Nutzer hin weisenden Position
- Figuren 4-8: -Prinzipdarstellungen von Vorrichtungen als Schnittansichten mit daran angeordneten Aufnahmeeinrichtungen

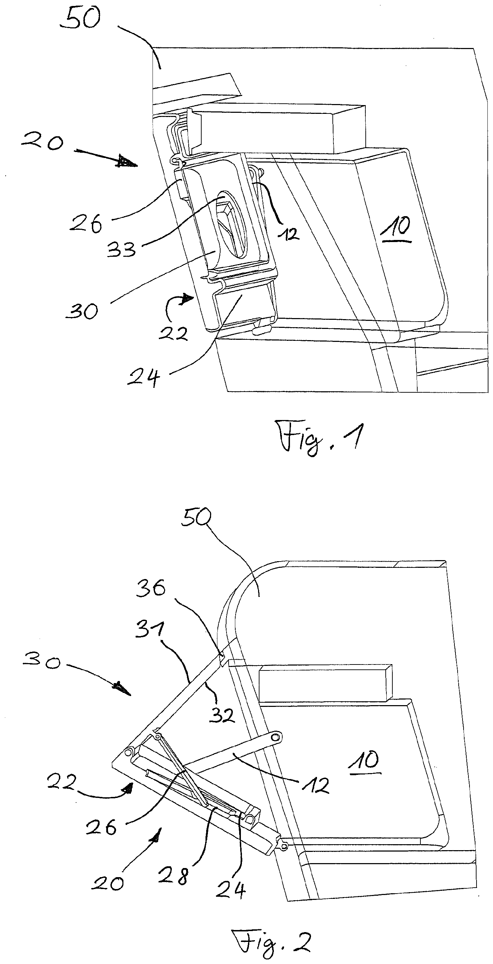

In der perspektivischen Ansicht in Figur 1 ist ein Aufbewahrungsfach 10, das in einer Instrumententafel 50 angeordnet ist, dargestellt. Das Aufbewahrungsfach 10 wird von einer Vorrichtung 20 verschlossen, die als Verschlussklappe ausgebildet ist und über einen Halter 12 gelenkig am Aufbewahrungsfach 10 gelagert ist. Die Vorrichtung 20 weist eine aufgrund der Perspektive nur angedeutete, zu einem Nutzer hin weisende Vorderseite 22 und eine der Vorderseite 22 gegenüberliegende, vom Nutzer weg weisende Rückseite 24 auf, wobei die Orientierung der Vorder- und Rückseite für den geschlossenen Zustand gilt. Eine Aufnahmeeinrichtung 30 ist an der Rückseite 24 der Vorrichtung 20 angeordnet und weist eine Aussparung 33 für Behältnisse auf. Weiterhin ist an der Rückseite 24 der Vorrichtung 20 eine Führungsvorrichtung 26 angeordnet, die mit der Rückseite 24 und der Aufnahmeeinrichtung 30 verbunden ist. Die Führungsvorrichtung 26 und die Aufnahmeeinrichtung 30 sind in dem geschlossenen Zustand der Vorrichtung 20 dadurch besonders kompakt und platzsparend an der Rückseite 24 angeordnet, um einen größtmöglich nutzbaren Raum im Aufbewahrungsfach 10 für aufzubewahrende Gegenstände bereitzustellen.

Bei der in Figur 2 dargestellten Ansicht ist die Vorrichtung 20 geöffnet und die Aufnahmeeinrichtung 30 in einer zu dem Nutzer hin weisenden Position angeordnet. Die Vorrichtung 20 ist über den Halter 12 mit dem Aufbewahrungsfach 10 verbunden. Ein erstes Ende des Halters 12 ist drehbar an dem Aufbewahrungsfach 10 gelagert. Ein zweites Ende des Halters 12 ist entlang einer nicht dargestellten, an der Vorrichtung 20 angeordneten Schiene verschieblich und drehbar gelagert. Die Aufnahmeeinrichtung 30 weist eine erste Seite 31 und eine der ersten Seite 31 gegenüberliegende zweite Seite 32 auf. Die Aufnahmeeinrichtung 30 ist über die Führungsvorrichtung 26 mit der Rückseite 24 der Vorrichtung 20 verbunden. Ein erstes Ende der Führungsvorrichtung 26 ist gelenkig an der Aufnahmeeinrichtung 30 angeordnet, wobei ein zweites Ende der Führungsvorrichtung 26 in einer Führungsschiene 28 entlangführbar ist. Die Führungsschiene 28 ist dazu an der Rückseite 24 der Vorrichtung 20 angeordnet. Bei der dargestellten Ausführungsform weist die Aufnahmeeinrichtung 30 eine Haltevorrichtung 36 auf, mit der die Aufnahmeeinrichtung 30 an der Instrumententafel 50 festgelegt ist, alternativ kann die Aufnahmeeinrichtung 30 auch an einem Rahmen oder einem Gehäuse des Aufbewahrungsfaches 10 festgelegt werden, so dass das Aufbewahrungsfach 10 als separates Modul gefertigt und in der Instrumententafel 50 eingesetzt werden kann. Die Haltevorrichtung 36 verriegelt die Aufnahmeeinrichtung 30 formschlüssig an dem Aufbewahrungsfach 10 oder der Instrumententafel 50, dazu sind an der Haltevorrichtung 36 und dem Aufbewahrungsfach 10 oder der Instrumententafel 50 korrespondierende Formschlusselemente angeordnet oder ausgebildet, beispielsweise Haken, Clipse, Laschen, Vorsprünge oder Klettverschlüsse, die eine reversible Festlegung ermöglichen. Die Vorrichtung 20 befindet sich dann in einem nicht vollständig geöffneten Zustand. Die Beinfreiheit wird durch die schräg angestellte Vorderseite 22 der Vorrichtung 20 erhöht. Wenn die Aufnahmeeinrichtung 30 wieder in eine Verstauposition gebracht wird und an der Vorrichtung 20 anliegt, wird die Vorrichtung 20 über den Halter 12 fixiert. Der Nutzer hat dann Zugriff zum Aufbewahrungsfach 10 und kann die Rückseite 24 der Vorrichtung 20 und die erste Seite 31 der Aufnahmeeinrichtung 30 als Ablagefläche für Gegenstände nutzen.

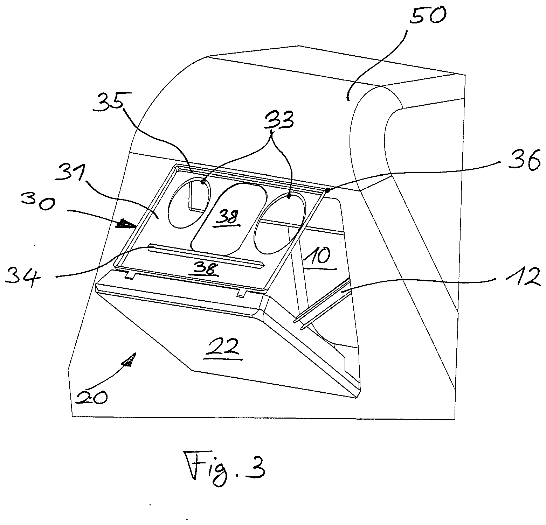

In Figur 3 ist die Vorrichtung 20 in einem nicht vollständig geöffneten Zustand dargestellt. Die Aufnahmeeinrichtung 30 ist über die Haltevorrichtung 36 an der Instrumententafel 50 festgelegt. Die Aufnahmeeinrichtung 30 weist an der ersten Seite 31 Aussparungen 33 für Behältnisse, zum Beispiel für Getränke, auf. Weiterhin sind eine Halterung 34, ein Klemmelement 35 und Ausnehmungen 38 für Tablets oder Mobiltelefone auf der dem Nutzer zugewandten ersten Seite 31 der Aufnahmeeinrichtung 30 angeordnet. Bei der dargestellten Ausführungsform ist keine Führungsvorrichtung vorgestehen. Wenn der Nutzer die Vorrichtung 20 in eine geöffnete Position gebracht hat, so ist die Aufnahmeeinrichtung 30 in die zum Nutzer hin weisende Position verschwenkbar und über die Haltevorrichtung 36 am Aufbewahrungsfach 10 festlegbar. Da sich die Vorrichtung 20 in einem nicht vollständig geöffneten Zustand befindet, muss eine Haltekraft ausschließlich über die Haltevorrichtung 36 aufgebracht werden, da der Halter 12 in diesem Zustand entlastet ist. Der nicht vollständig geöffnete Zustand der Vorrichtung 20 hat für den Nutzer den Vorteil, dass die Beinfreiheit erhöht wird. Um die Aufnahmeeinrichtung 30 zu nutzen, wird die Vorrichtung 20 oder die Verschlussklappe oder die Handschuhfachklappe geöffnet, die auf der Rückseite 24 daran um eine Schwenkasche gelenkig gelagerte Aufnahmeeinrichtung 30 weggeklappt und aufgestellt und anschließend mit der Haltervorrichtung 36, die sich an dem der Schwenkachse gegenüberliegenden Seite befindet, formschlüssig an der Instrumententafel 50 oder dem Aufbewahrungsfach 10 festgelegt.

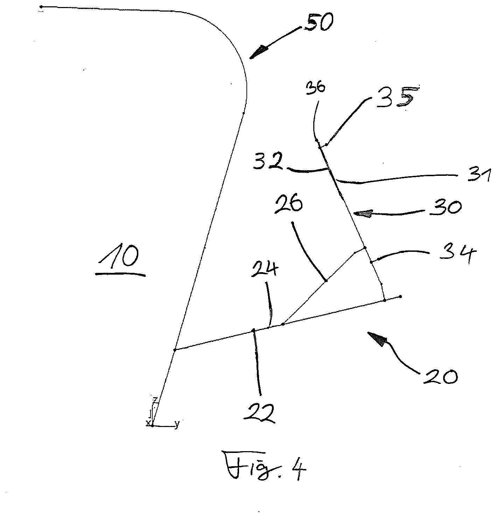

Bei der in Figur 4 dargestellten prinzipiellen Schnittansicht ist die Vorrichtung 20 vollständig geöffnet und über einen nicht dargestellten Halter oder ein Scharnier mit dem Aufbewahrungsfach 10 verbunden. Die Aufnahmeeinrichtung 30 ist gelenkig an der Vorrichtung 20 gelagert und in die zum Nutzer hin weisende Position aufgerichtet. Die Führungsvorrichtung 26 dient der Führung der Aufnahmeeinrichtung 30 und der Arretierung in der gewünschten Position. Die Führungsvorrichtung 26 ist dabei derart ausgestaltet, dass ein mit der Rückseite 24 verbundenes Ende entlang der Rückseite 24 beispielsweise stufenlos oder verrastbar entlang der Rückseite 24 verschiebbar ist. Auf diese Weise kann in Abhängigkeit der Nutzergröße und/oder der gewünschten Ausrichtung die Aufnahmeeinrichtung 30 individuell positioniert werden, ohne dass die Haltevorrichtung 36 eingehakt oder auf andere Weise befestigt werden müsste. Auf der dem Nutzer zugewandten ersten Seite 31 der Aufnahmeeinrichtung 30 ist eine Halterung 34 und ein Klemmelement 35 angeordnet, mit denen Tablets oder Mobiltelefone an der Aufnahmeeinrichtung 30 aufgenommen werden können. Vorteilhafterweise ist das Klemmelement 35 und/oder die Halterung 34 entlang der Aufnahmeeinrichtung 30 verschiebbar, so dass ein auf der Halterung 34 aufliegendes Tablet oder Mobiltelefon durch das Klemmelement 35 eingefasst werden kann. Ein Verrutschen oder Herunterfallen des Tablets oder Mobiltelefons wird dadurch verhindert. Die Aufnahmeeinrichtung 30 kann alternativ über die Haltevorrichtung 36 an verschiedenen Position an der Instrumententafel 50 festgelegt werden, wodurch jedoch feste Orientierungen der Aufnahmeeinrichtung 30 vorgegeben sind.

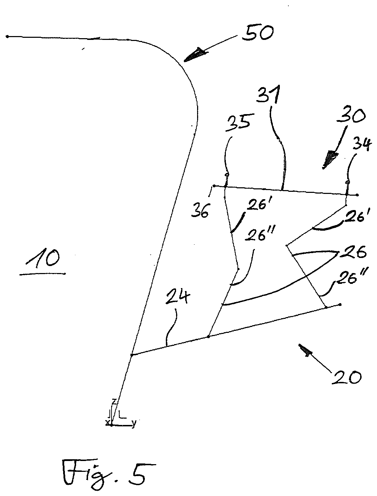

Eine Variante der Erfindung mit einer alternativen Befestigung der Aufnahmeeinrichtung 30 an der Vorrichtung 20 ist in Figur 5 dargestellt. Die Aufnahmeeinrichtung 30 ist über die Führungsvorrichtung 26 mit der Rückseite 24 der Vorrichtung 20 verbunden. Die Vorrichtung 20 ist über einen nicht dargestellten Halter oder ein Scharnier mit dem Aufbewahrungsfach 10 verbunden. Die Führungsvorrichtung 26 ist als Mehrlenkersystem ausgebildet und weist aus einem vom Nutzer aus betrachtet vorderen Teil und einem hinteren Teil auf. Der vordere Teil und der hintere Teil sind jeweils aus zwei gelenkig miteinander verbundenen Elementen 26', 26" aufgebaut. Die Elemente 26', 26" sind stufenlos zueinander verlagerbar und arretierbar ausgebildet, wodurch sich die Aufnahmeeinrichtung 30 stufenlos in unterschiedlichen Winkel, Entfernungen und Höhen zu dem Nutzer einstelle lässt. Die Aufnahmeeinrichtung 30 weist auf der ersten Seite 31 eine Halterung 34 und ein Klemmelement 35 zum Festlegen von Mobiltelefonen und Tablets auf. Die Halterung 34 und/oder das Klemmelement 35 sind relativ zueinander verschiebbar. Die Aufnahmeeinrichtung 30 kann über eine Haltevorrichtung 36 mit dem von dem Nutzer abgewandten Ende auch an der Instrumententafel 50 festgelegt werden.

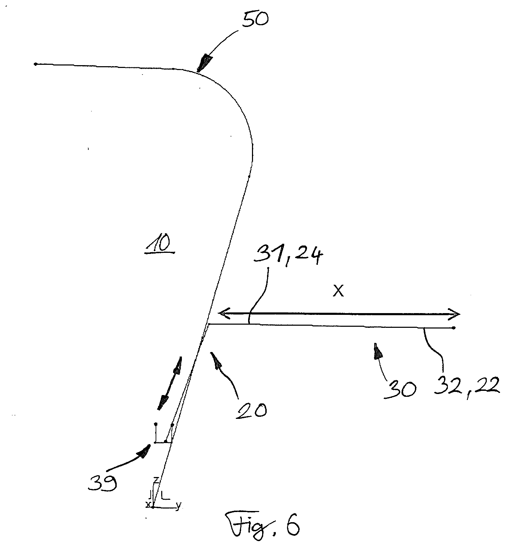

Bei der in Figur 6 dargestellten Ausführungsform ist die Aufnahmeeinrichtung 30 gelenkig und verschieblich mit der Vorrichtung 20 verbunden. Die Aufnahmeeinrichtung 30 ist als Teil der Vorrichtung 20 ausgebildet und teleskopartig auf eine maximale Tiefe x herausziehbar. Die Rückseite 24 der Vorrichtung 20 wird so durch die erste Seite 31 und die Vorderseite 22 durch die zweite Seite 32 der Aufnahmeeinrichtung 30 gebildet. Die Aufnahmeeinrichtung 30 kann über ein Lager 39 entlang der mit einem Doppelpfeil prinzipiell dargestellten Richtung verschoben werden, um die Aufnahmeeinrichtung 30 in der Vorrichtung 20 zu verstauen oder sie daraus herausziehen zu können. Die Aufnahmeeinrichtung 30 bildet in der Verstauposition einen Abschnitt der Vorrichtung 20, der das in der Instrumententafel 50 befindliche Aufbewahrungsfach 10 verschließt. Darüber hinaus kann die Aufnahmeeinrichtung 30 auch Aussparungen, Ausnehmungen, Halterungen und Klemmelemente zum Aufnehmen und Festlegen von Gegenständen aufweisen.

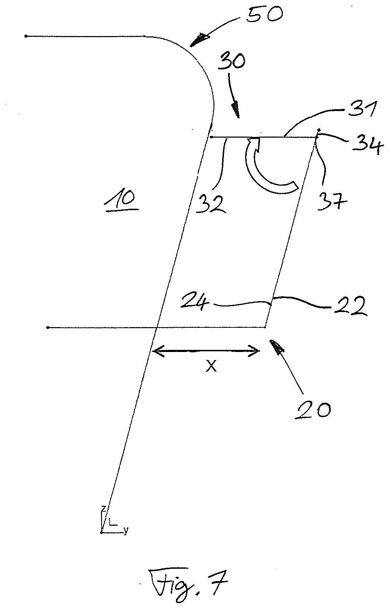

Gemäß der Ausführungsform in Figur 7 ist die Vorrichtung 20 als Schublade ausgebildet, die auf eine Tiefe x herausgezogen ist. Die Vorrichtung 20 ist entlang der mit dem Doppelpfeil dargestellten Richtungen horizontal verschiebbar. Die Aufnahmeeinrichtung 30 ist an der Rückseite 24 der Vorrichtung 20 angeordnet und über das Drehlager 37 in eine zum Nutzer hin weisende Position oder in eine von dem Nutzer einsehbare Position gebracht. Das Drehlager 37 kann gedämpft und mit einer Arretierung versehen ausgebildet sein, um die Aufnahmeeinrichtung in dieser Position zu halten. Die Vorbringung in die dargestellte waagerechte Position kann durch eine Feder oder dergleichen unterstütz werden, die Verschwenkung ist durch den Pfeil angedeutet. Die Aufnahmeeinrichtung 30 kann auch über eine Haltevorrichtung am Aufbewahrungsfach 10 oder an der Instrumententafel 50 festgelegt werden, um eine andere Ausrichtung oder zusätzliche Stabilität zu erreichen.

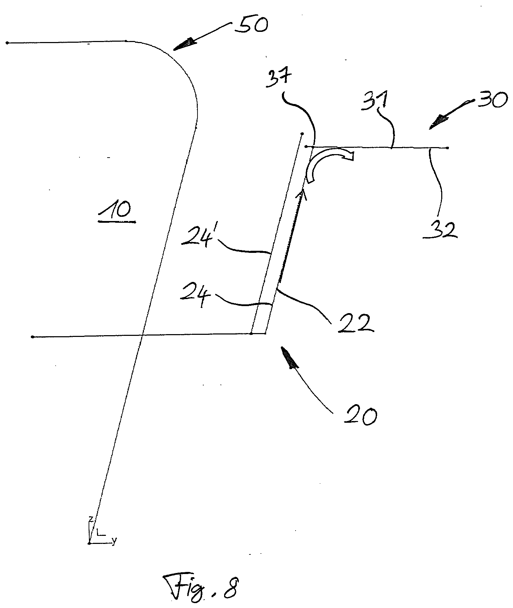

In Figur 8 ist eine weitere Variante der Erfindung dargestellt, bei der die Aufnahmeeinrichtung 30 als Teil der Vorderseite 22 der Vorrichtung 20 ausgebildet ist. Die Aufnahmeeinrichtung 30 ist in oder an der Rückseite der Vorrichtung 20 oder der Handschuhfachklappe verschieblich gelagert und in die mit dem Pfeil gekennzeichnete Richtung herausführbar und über das Drehlager 37 in die zum Nutzer hin weisende Position verschwenkbar und festlegbar. Die Vorrichtung 20 kann dazu als Rahmen ausgebildet sein, so dass die Aufnahmeeinrichtung 30 im geschlossenen Zustand ein Verkleidungsteil ausbildet und als Frontabschluss der Vorrichtung 20 sichtbar ist und auch eine Dekorfunktion übernimmt. Ebenso kann der Rahmen an der Rückseite 24 der Vorrichtung 20 angeordnet sein, aus dem die Aufnahmeeinrichtung 30 herausgezogen werden kann. Die Aufnahmeeinrichtung 30 kann auch zwischen einer doppelten Rückseite 24, 24' angeordnet sein und daran entlang herausgeführt werden.

### Bezugszeichenliste

- 10: Aufbewahrungsfach
- 12: Halter
- 20: Vorrichtung
- 22: Vorderseite
- 24: Rückseite
- 24': Rückseite
- 26: Führungsvorrichtung
- 26': Element
- 26": Element
- 28: Führungsschiene
- 30: Aufnahmeeinrichtung
- 31: erste Seite
- 32: zweite Seite
- 33: Aussparung für Behältnis
- 34: Halterung
- 35: Klemmelement
- 36: Haltevorrichtung
- 37: Drehlager
- 38: Ausnehmung für Tablet/Smartphone
- 39: Lager
- 50: Instrumententafel

## Patentansprüche

1. Vorrichtung zum Verschließen einer Zugangsöffnung zu einem Aufbewahrungsfach (10) in einem Fahrzeug, die beweglich an dem Aufbewahrungsfach (10) gelagert ist und eine in einem geschlossenen Zustand von einem Nutzer weg weisende Rückseite (24) und eine zu dem Nutzer hin weisende Vorderseite (22) aufweist, mit einer Aufnahmeeinrichtung (30) für Gegenstände, die an der Vorrichtung (20) angeordnet ist und die in einem geöffneten Zustand der Vorrichtung (20) in eine zu dem Nutzer hin weisende Position bringbar ist, **gekennzeichnet durch** zumindest eine Führungsvorrichtung (26) zum Führen der Aufnahmeeinrichtung (30) aus einer Verstauposition in die zum Nutzer hin weisende Position, wobei ein erstes Ende der Führungsvorrichtung (26) gelenkig an der Aufnahmeeinrichtung (30) angeordnet und ein zweites Ende der Führungsvorrichtung (26) in einer an der Rückseite (24) der Vorrichtung (25) angeordneten Führungsschiene (28) entlangführbar ist und das mit der Rückseite (24) verbundene Ende der Führungsvorrichtung (26) stufenlos oder verrastbar entlang der Rückseite (24) verschiebbar ist,

2. Vorrichtung nach Anspruch 1, **dadurch gekennzeichnet, dass** sie gelenkig oder verschieblich an dem Aufbewahrungsfach (10) gelagert ist.

3. Vorrichtung nach Anspruch 1 oder 2, **dadurch gekennzeichnet, dass** die Aufnahmeeinrichtung (30) an der Rückseite (24) angeordnet ist.

4. Vorrichtung nach einem der voranstehenden Ansprüche, **dadurch gekennzeichnet, dass** die Aufnahmeeinrichtung (30) plattenförmig ausgebildet ist.

5. Vorrichtung nach einem der voranstehenden Ansprüche, **dadurch gekennzeichnet, dass** die Aufnahmeeinrichtung (30) gelenkig gelagert ist.

6. Vorrichtung nach einem der voranstehenden Ansprüche, **gekennzeichnet durch** ein Energiespeicherelement zum Vorspannen der Aufnahmeeinrichtung (30), so dass die Aufnahmeeinrichtung (30) bei einem Entspannen des Energiespeicherelements automatisch in die zum Nutzer hin weisende Position bringbar ist.

7. Vorrichtung nach einem der voranstehenden Ansprüche, **dadurch gekennzeichnet, dass** die Aufnahmeeinrichtung (30) zumindest eine Aussparung (33) zum Halten von Behältnissen aufweist.

8. Vorrichtung nach einem der voranstehenden Ansprüche, **dadurch gekennzeichnet, dass** die Aufnahmeeinrichtung (30) zumindest eine Ausnehmung (38) und/oder zumindest eine Halterung (34) mit einem Klemmelement (35) zum Festlegen von Tablets oder Mobiltelefonen aufweist.

9. Vorrichtung nach einem der voranstehenden Ansprüche, **dadurch gekennzeichnet, dass** die Aufnahmeeinrichtung (30) eine erste Seite (31) und eine der ersten Seite (31) abgewandte, zur ersten Seite (31) unterschiedlich ausgebildete zweite Seite (32) aufweist, wobei die erste Seite (31) oder die zweite Seite (32) in die zum Nutzer hin weisende Position bringbar ist.

10. Vorrichtung nach einem der voranstehenden Ansprüche, **dadurch gekennzeichnet, dass** die Aufnahmeeinrichtung (30) eine Haltevorrichtung (36) aufweist, mittels der die Aufnahmeeinrichtung (30) in der zum Nutzer hin weisenden Position an dem Aufbewahrungsfach (10) oder einem Strukturbauteil des Fahrzeuges festlegbar ist.

11. Vorrichtung nach Anspruch 1, **gekennzeichnet durch** zumindest eine Rastung, in die die Führungsvorrichtung (26) zum Halten der Aufnahmeeinrichtung (30) in der zum Nutzer hin weisenden Position einrastbar ist.

12. Vorrichtung nach Anspruch 1 oder 2, **dadurch gekennzeichnet, dass** die Aufnahmeeinrichtung (30) ausschließlich über die Führungsvorrichtung (26) mit der Rückseite (24) verbunden ist.

13. Aufbewahrungsfach (10) für Fahrzeuge, mit einer Zugangsöffnung und einer Vorrichtung (20) zum Verschließen der Zugangsöffnung nach einem der voranstehenden Ansprüche.

## Claims

1. Device for closing an access opening to a storage compartment (10) in a vehicle, which device is mounted movably on the storage compartment (10) and has a rear face (24), directed away from a user in a closed state, and a front face (22), directed towards the user, with a receiving means (30) for objects, which receiving means (30) is arranged on the device (20) and, in an opened state of the device (20), can be brought to a position directed towards the user, **characterized by** at least one guide device (26) for guiding the receiving means (30) from a stowage position to the position directed towards the user, wherein a first end of the guide device (26) is arranged in an articulated manner on the receiving means (30), and a second end of the guide device (26) can be guided along a guide rail (28) arranged on the rear face (24) of the device (25), and the end of the guide device (26) connected to the rear face (24) is movable along the rear face (24) in a stepless or lockable manner.

2. Device according to Claim 1, **characterized in that** it is mounted on the storage compartment (10) in an articulated or displaceable manner.

3. Device according to Claim 1 or 2, **characterized in that** the receiving means (30) is arranged on the rear face (24).

4. Device according to one of the preceding claims, **characterized in that** the receiving means (30) has a plate-shaped configuration.

5. Device according to one of the preceding claims, **characterized in that** the receiving means (30) is mounted in an articulated manner.

6. Device according to one of the preceding claims, **characterized by** an energy storage element for pretensioning the receiving means (30), such that, upon relaxation of the energy storage element, the receiving means (30) can be brought automatically to the position directed towards the user.

7. Device according to one of the preceding claims, **characterized in that** the receiving means (30) has at least one cutout (33) for holding containers.

8. Device according to one of the preceding claims, **characterized in that** the receiving means (30) has at least one recess (38) and/or at least one retainer (34) with a clamping element (35) for securing tablets or mobile phones.

9. Device according to one of the preceding claims, **characterized in that** the receiving means (30) has a first side (31) and, facing away from the first side (31), a second side (32) configured differently than the first side (31), wherein the first side (31) or the second side (32) can be brought to the position directed towards the user.

10. Device according to one of the preceding claims, **characterized in that** the receiving means (30) has a holding device (36), with which the receiving means (30), in the position directed towards the user, can be secured on the storage compartment (10) or on a structural part of the vehicle.

11. Device according to Claim 1, **characterized by** at least one latch into which the guide device (26) can be locked for holding the receiving means (30) in the position directed towards the user.

12. Device according to Claim 1 or 2, **characterized in that** the receiving means (30) is connected to the rear face (24) exclusively via the guide device (26) .

13. Storage compartment (10) for vehicles, with an access opening and a device (20), according to one of the preceding claims, for closing the access opening.

## Revendications

1. Dispositif pour fermer une ouverture d'accès à un casier de rangement (10) dans un véhicule, qui est monté mobile sur le casier de rangement (10) et qui comprend une face arrière (24) dirigée en éloignement de l'utilisateur dans un état fermé et une face avant (22) dirigée vers l'utilisateur, comportant un moyen de réception (30) destiné à des objets et agencé sur le dispositif (20), qui peut être amené dans une position dirigée vers l'utilisateur, dans un état ouvert du dispositif (20),
**caractérisé par** au moins un dispositif de guidage (26) pour guider le moyen de réception (30) depuis une position de rangement jusque dans la position dirigée vers l'utilisateur, une première extrémité du dispositif de guidage (26) étant agencée en articulation sur le moyen de réception (30) et une seconde extrémité du dispositif de guidage (26) pouvant être guidée le long d'un rail de guidage (28) agencé sur la face arrière (24) du dispositif (25), et l'extrémité du dispositif de guidage (26) reliée à la face arrière (24) étant mobile en translation en continu ou avec possibilité d'enclenchement le long de la face arrière (24).

2. Dispositif selon la revendication 1,
**caractérisé en ce que**
il est monté en articulation ou en translation sur le casier de rangement (10).

3. Dispositif selon la revendication 1 ou 2,
**caractérisé en ce que**
le moyen de réception (30) est agencé sur la face arrière (24).

4. Dispositif selon l'une des revendications précédentes,
**caractérisé en ce que**
le moyen de réception (30) est réalisé en forme de plaque.

5. Dispositif selon l'une des revendications précédentes,
**caractérisé en ce que**
le moyen de réception (30) est monté en articulation.

6. Dispositif selon l'une des revendications précédentes,
**caractérisé par**
un élément d'accumulation d'énergie pour précontraindre le moyen de réception (30), de telle sorte que le moyen de réception (30) peut être amené automatiquement jusque dans la position dirigée vers l'utilisateur lors d'une détente de l'élément d'accumulation d'énergie.

7. Dispositif selon l'une des revendications précédentes,
**caractérisé en ce que**
le moyen de réception (30) présente au moins une échancrure (33) pour retenir des réceptacles.

8. Dispositif selon l'une des revendications précédentes,
**caractérisé en ce que**
le moyen de réception (30) comprend au moins un évidement (38) et/ou au moins une monture (34) pourvue d'un élément de coincement (35) pour immobiliser des tablettes numériques ou des téléphones portables.

9. Dispositif selon l'une des revendications précédentes,
**caractérisé en ce que**
le moyen de réception (30) présente une première face (31) et une seconde face (32) détournée de la première face (31) et réalisée de manière différente de la première face (31), la première face (31) ou la seconde face (32) pouvant être amenée dans la position dirigée vers l'utilisateur.

10. Dispositif selon l'une des revendications précédentes,
**caractérisé en ce que**
le moyen de réception (30) présente un dispositif de retenue (36) permettant d'immobiliser le moyen de réception (30) sur le casier de rangement (10) ou sur un composant structurel du véhicule, dans la position dirigée vers l'utilisateur.

11. Dispositif selon la revendication 1,
**caractérisé par**
au moins un cran dans lequel le dispositif de guidage (26) peut s'enclencher pour retenir le moyen de réception (30) dans la position dirigée vers l'utilisateur.

12. Dispositif selon la revendication 1 ou 2,
**caractérisé en ce que**
le moyen de réception (30) est relié à la face arrière (24) exclusivement par le dispositif de guidage (26).

13. Casier de rangement (10) pour véhicules, comportant une ouverture d'accès et un dispositif (20) pour fermer l'ouverture d'accès, selon l'une des revendications précédentes.
